# EUROPEAN PATENT SPECIFICATION

(11) **EP 3 188 419 B1**
(45) Date of publication and mention of the grant of the patent: **05.12.2018**
(21) Application number: 16205669.1
(22) Date of filing: 21.12.2016
(51) Int. Cl.: H04L 12/701, H04L 12/741, H04L 12/865, H04L 12/861, H04L 12/947, H04L 12/70

(54) **PACKET STORING AND FORWARDING METHOD AND CIRCUIT, AND DEVICE**
PAKETSPEICHERUNGS- UND -WEITERLEITUNGSVERFAHREN UND -SCHALTUNG SOWIE VORRICHTUNG
PROCÉDÉ ET CIRCUIT DE MÉMORISATION ET DE TRANSMISSION DE PAQUETS ET DISPOSITIF

(30) Priority: 30.12.2015 CN 201511026363
(43) Date of publication of application: 05.07.2017
(73) Proprietor: Huawei Technologies Co., Ltd., Longgang District Shenzhen, Guangdong 518129 (CN)
(72) Inventor: WANG, Jin, Shenzhen, Guangdong 518129 (CN)
(74) Representative: Gill Jennings & Every LLP

(56) References cited:
- US-A1- 2002 085 565
- US-A1- 2005 129 047
- US-A1- 2007 104 211

## Description

### TECHNICAL FIELD

The present invention relates to the field of communications technologies, and in particular, to a packet storing and forwarding method and circuit, and a device.

### BACKGROUND

A computer network refers to a computer system that implements resource sharing and information transfer under management and coordination of a network operating system, network management software, and a network communications protocol after multiple computers with different geographical locations and independent functions and peripheral devices of the computers are connected by using communication line. Network equipment is a general term of physical entities that are connected to a network, and mainly includes computers (including personal computers, wireless access terminals, and servers), hubs, switches, routers, and so on, and the switches and the routers are major forwarding devices. Forwarding devices such as the routers and the switches run various network protocols, so as to generate, forward, and terminate a packet in a network.

A conventional forwarding mode of network equipment such as a switch or a router mainly includes two types: one type is store-forward (SF for short) and the other type is cut-though (English: Cut-By using, CT for short). The CT is a network switching technology in which receiving and sending are performed simultaneously, does not temporarily store a data packet that is to be forwarded, and cannot implement switching between ports with different rates.

The SF is a network switching technology in which a data packet is first received integrally, and then forwarded. The SF can perform an integrality and validity check on a received packet, so as to filter out a non-integral or invalid packet, then parses a packet header, and forwards the packet to a destination port after performing processing operations such as feature field extraction, flow classification, and access control list (English: Access Control List, ACL for short) and L2/L3 (layer 2/layer 3) forwarding and editing. The SF forwarding mode can support receiving and storing of an ingress packet to implement switching between ports with different rates, but a processing delay is relatively high.

The SF is a classic forwarding technology for computer networks, has a strong anti-burst capability, and takes a very important place in conventional networks. However, with emergence of applications having low delays and high bandwidths such as a data center (English: Data Center, DC for short), forwarding technologies having strong anti-burst capabilities and low delays will become more important. Due to a relatively high processing delay, the conventional SF technology gradually cannot meet current requirements.

US 2002/0085565 A1 describes processing packets and streams differently.

### SUMMARY

Embodiments of the present invention provide a packet storing and forwarding method and circuit, and a device, so as to provide a low-delay storing and forwarding technology.

According to a first aspect, the present invention provides a packet storing and forwarding method, and the method is applied to a storage and forwarding device; an input packet scheduler of the storage and forwarding device can cut a received packet into multiple cells, where the first cell of each packet is referred to as a head cell; a packet analyzer of the storage and forwarding device can obtain control information of the packet by parsing the head cell of the packet; a reassembly and dispatch module of the storage and forwarding device can receive the head cell of the packet and obtain the corresponding control information from the packet analyzer, where the control information includes at least a forwarding mode of the packet; a network processor of the storage and forwarding device can process the packet according to the forwarding mode of the packet (such as ACL processing or label switching processing), and if the forwarding mode of the packet is store-forward (that is, a conventional mode in which a packet is forwarded after being integrally received and stored), the packet is processed after all the cells of the packet are received and stored in a packet buffer, or if the forwarding mode of the packet is adaptive forwarding (a forwarding mode for lowering a delay provided in the present invention), the packet is processed at the same time when remaining cells of the packet are received and stored (that is, receiving the remaining cells and processing the packet are performed in parallel); and after the processing is finished, and it is determined that all the cells of the packet have been received (that is, all the cells of the packet have been stored in the packet buffer), the packet is forwarded.

The method designs an adaptive forwarding mode. In the forwarding mode, a packet is processed after a head cell of the packet is received, and the processing process and a process of receiving the remaining cells of the packet are performed simultaneously and in parallel. Compared with a solution in the conventional store-forward mode in which a packet is processed only after all the cells of the packet are received, the adaptive forwarding mode effectively reduces duration of stay of a packet in a storage and forwarding device, and lowers a delay, thereby providing a low-delay storing and forwarding technology. In addition, similar to the conventional store-forward, an adaptive forwarding module of the method still stores received cells of a packet and forwards the packet only after all the cells of the packet are received, stored and processed. Therefore, similar to the conventional storing and forwarding technology, the method can implement switching between ports with different rates. It can be seen that the method of the embodiments of the present invention retains the advantage of the conventional storing and forwarding technology and lowers a forwarding delay.

Optionally, the control information may further include an input channel and a priority of the packet, the input channel refers to an input channel between a media access controller and the input packet scheduler of the storage and forwarding device, the priority may be determined according to a result of flow classification of the packet and a policy by the packet analyzer of the storage and forwarding device or extracted from the packet by the packet analyzer, and before the processing the packet according to the forwarding mode of the packet, the method may further include: adding, according to the input channel and the priority of the packet, an address of the head cell of the packet to an input queue corresponding to the input channel and the priority of the packet, where the input queue is used in dispatching, so that the packet is subsequently dispatched in an order of the input queue, and a packet that first enters the queue will be first processed. Packets are dispatched by using an input queue, and important packets can be forwarded in priority by using a priority as one of dispatching factors during dispatching.

Optionally, the following manners may be used according to different forwarding modes, and the adding the address of the head cell of the packet to an input queue corresponding to the input channel and the priority of the packet includes: for a packet whose forwarding mode is adaptive forwarding, after receiving and storing a head cell of the packet, adding an address of the head cell of the packet to the input queue; and for a packet whose forwarding mode is store-forward, after receiving and storing all cells of the packet, adding an address of a head cell of the packet to the input queue. Subsequent processing procedures can be controlled by using different enqueue modes for packets with different forwarding modes. In this way, a packet with a store-forward mode cannot be enqueued or processed until all cells are received, while a packet with an adaptive forwarding mode can be enqueued and processed at once after a head cell is received, with no need to wait until all cells are received.

According to a second aspect, the present invention provides a packet storing and forwarding circuit, including: a reassembly and dispatch module and a network processor that are connected to each other, where the reassembly and dispatch module can receive cells of a packet and obtain corresponding control information from a packet analyzer of a storage and forwarding device, and the control information includes a forwarding mode of the packet; the network processor can process the packet according to the forwarding mode of the packet, and if the forwarding mode of the packet is store-forward (that is, a conventional mode in which a packet is forwarded after being integrally received and stored), process the packet after receiving and storing all the cells of the packet and obtaining the complete packet, or if the forwarding mode of the packet is adaptive forwarding (the forwarding mode for lowering a delay provided in the present invention), process the packet at the same time when receiving and storing remaining cells of the packet (that is, receiving the remaining cells and processing the packet are performed in parallel); and the reassembly and dispatch module is further configured to forward, after the network processor finishes processing, the packet after determining that all the cells of the packet have been received and stored.

The circuit supports an adaptive forwarding mode, and can simultaneously process a packet and receive remaining cells of the packet in parallel, which reduces duration of stay of the packet in the storage and forwarding device, and lowers a delay, thereby providing a low-delay storing and forwarding technology. In addition, similar to the conventional store-forward, an adaptive forwarding module of the method still stores received cells of a packet and forwards the packet only after all the cells of the packet are received, stored and processed. Therefore, similar to the conventional storing and forwarding technology, the method can implement switching between ports with different rates. It can be seen that the method of the embodiments of the present invention retains the advantage of the conventional storing and forwarding technology and lowers a forwarding delay.

Optionally, the control information may further include an input channel and a priority of the packet, the input channel refers to an input channel between a media access controller and an input packet scheduler of the storage and forwarding device, the priority may be determined according to a result of flow classification of the packet and a policy by the packet analyzer of the storage and forwarding device or extracted from the packet by the packet analyzer, and the reassembly and dispatch module may include: an input queue unit, configured to provide at least one input queue, so that the packet is dispatched to the network processor for processing in an order of the input queue; and a reassembly and integrality checker, configured to add, according to the input channel and the priority of the packet, the packet to an input queue corresponding to the input channel and the priority of the packet. Packets are dispatched by using an input queue, and important packets can be forwarded in priority by using a priority as one of dispatching factors during dispatching.

Optionally, the reassembly and integrality checker can enqueue a received packet in different manners according to different forwarding modes. For a packet whose forwarding mode is adaptive forwarding, the reassembly and integrality checker adds, after receiving and storing a head cell of the packet, an address of the head cell of the packet to the input queue; and for a packet whose forwarding mode is store-forward, the reassembly and integrality checker adds, after receiving and storing all cells of the packet, an address of a head cell of the packet to the input queue. Subsequent processing procedures can be controlled by using different enqueue modes for packets with different forwarding modes. In this way, a packet with a store-forward mode cannot be enqueued or processed until all cells are received, while a packet with an adaptive forwarding mode can be enqueued and processed at once after a head cell is received, with no need to wait until all cells are received.

It can be seen from the above that a low-delay storing and forwarding technology is provided in some feasible implementation manners of the present invention.

### BRIEF DESCRIPTION OF DRAWINGS

FIG. 1 is a schematic structural diagram of a storage and forwarding device;
FIG. 2 is a schematic structural diagram of a packet storing and forwarding circuit according to an embodiment of the present invention; and
FIG. 3 is a schematic flowchart of a packet storing and forwarding method according to an embodiment of the present invention.

### DESCRIPTION OF EMBODIMENTS

To make a person skilled in the art understand the technical solutions in the present invention better, the following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

In the specification, claims, and accompanying drawings of the present invention, the terms "first", "second", and so on are intended to distinguish between different objects but do not indicate a particular order. In addition, the terms "including", "including", or any other variant thereof, are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

Embodiments of the present invention provide a packet storing and forwarding method and circuit, and a device, so as to provide a low-delay storing and forwarding technology. The technology is applied to a storage and forwarding device.

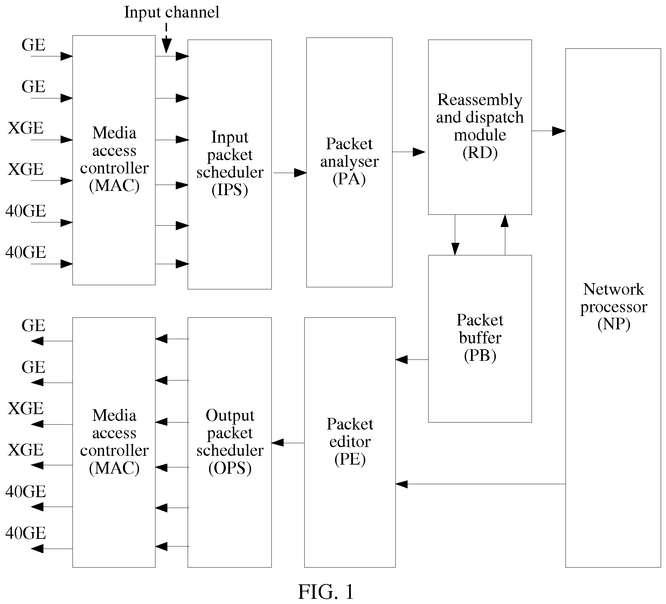

FIG. 1 is a schematic structural diagram of a storage and forwarding device. As shown in FIG. 1, the storage and forwarding device generally includes the following modules: a media access controller (MAC for short), an input packet scheduler (IPS for short), a packet analyzer (PA for short), a reassembly and dispatch module (RD for short), a network processor (NP for short), a packet buffer (PB for short), a packet editor (PE for short), and an output packet scheduler (OPS for short). Generally, each of the foregoing modules may be implemented by using one integrated circuit chip (chip for short), and sometimes, some of the foregoing modules may be integrated on one chip.

A process of performing packet storing and forwarding by the storage and forwarding device is as follows:
1. The MAC receives a packet from a port, and sends the packet to the IPS. The port may be an Ethernet port such as a GE (Gigabit Ethernet, Gigabit Ethernet port), an XGE (10-Gigabit Ethernet port), or a 40GE (40-Gigabit Ethernet port). There may be multiple logic input channels between the MAC and the IPS, and the multiple input channels may be in a one-to-one correspondence with multiple Ethernet ports. The packet received by the MAC by using the port may be sent to the IPS by using a corresponding input channel.
2. The IPS temporarily stores the packet based on the port and cuts the packet into one or more cells (a cell with a capacity of 80 B or other capacities) with proper lengths. The first cell of the packet is referred to as a head cell, and the last cell is referred to as a tail cell. A port that receives an integral cell participates in dispatching, and a port that gets a priority of dispatching sends a cell to the PA. It should be noted that, cells of different packets of a same port are not interleaved, but cells of different ports may be interleaved. Therefore, packets need to be reassembled based on ports in the subsequent RD module.
3. The PA receives cells, parses a head cell and obtains basic control information (English: Control Information, CI for short) of a packet to which the head cell belongs, and then sends the head cell, the corresponding CI, and data of remaining cells to the RD.
4. The RD module reassembles the received cells, and the reassembling refers to that multiple cells belonging to a same packet are assembled. Then the RD module allocates buffer resources of the cells in the PB and then temporarily stores data of the cells in the PB. After all the cells of the packet are received and the complete packet is obtained, the head cell of the complete packet is sent to the NP for processing.
5. The NP processes the packet according to the head cell of the packet. The processing generally refers to processing on forwarded information, such as ACL processing, or label switching processing. Specific processing operations may be different in different types of networks and different application scenarios, and packet processing operations performed by the NP are not limited in the present invention.
6. The NP sends an editing command and a forwarding command to the PE after finishing processing on the forwarded information. The PE obtains data of the cells of the packet from the PB according to the forwarding command, and edits the packet according to the editing command and sends an edited packet to the OPS. Alternatively, the NP may send the forwarding command to the RD, the RD reads data of the cells of the packet from the PB and sends the data to the PE, and the PE edits the packet according to the editing command sent by the NP, and sends an edited packet to the OPS.
7. The OPS reassembles received cells into a complete packet and sends the packet to the corresponding MAC and a corresponding port, and the MAC forwards the packet to another device by using the corresponding port.

An embodiment of the present invention provides a low-delay technical solution for storing and forwarding a packet, including a packet storing and forwarding method and a packet storing and forwarding circuit.

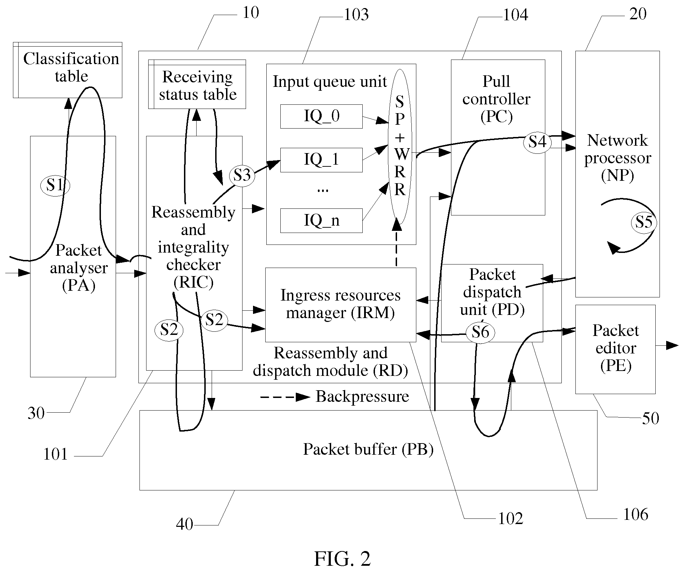

FIG. 2 is a schematic structural diagram of a packet storing and forwarding circuit according to an embodiment of the present invention. The packet storing and forwarding circuit mainly includes: a reassembly and dispatch module (RD) 10, and a packet buffer (PB) 40 and a network processor (NP) 20 that are separately connected to the RD 10. The reassembly and dispatch module 10 is configured to receive cells of a packet, reassemble the received cells, store the cells in the packet buffer, where the cells of the packet include a head cell, and obtain control information according to the head cell, where the control information includes a forwarding mode of the packet; the reassembly and dispatch module 10 is further configured to dispatch the received packet to the network processor 20 for processing; the network processor 20 is configured to process the packet according to the forwarding mode of the packet, and if the forwarding mode of the packet is store-forward, process the packet after the reassembly and dispatch module 10 receives and stores all the cells of the packet; or if the forwarding mode of the packet is adaptive forwarding, process the packet at the same time when the reassembly and dispatch module 10 receives and stores remaining cells of the packet; and the reassembly and dispatch module 10 is further configured to forward, after the network processor 20 finishes processing, the packet after determining that all the cells of the packet have been received and stored. The storing refers to that the cells are stored in the packet buffer 40. Optionally, the packet storing and forwarding circuit may further include a packet analyzer (PA) 30 and a packet editor (PE) 50.

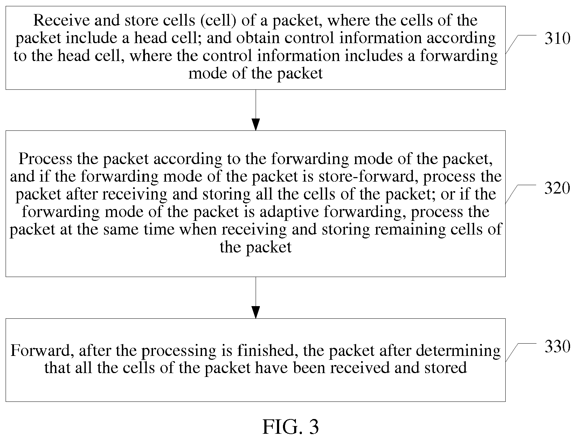

FIG. 3 is a basic schematic flowchart of a packet storing and forwarding method according to an embodiment of the present invention. The packet storing and forwarding method mainly includes the following steps:
310: Receive and store cells (cell) of a packet, where the cells of the packet include a head cell; and obtain control information according to the head cell, where the control information includes a forwarding mode of the packet.
320: Process the packet according to the forwarding mode of the packet, and if the forwarding mode of the packet is store-forward, process the packet after receiving and storing all the cells of the packet; or if the forwarding mode of the packet is adaptive forwarding, process the packet at the same time when receiving and storing remaining cells of the packet.
330: Forward, after the processing is finished, the packet after determining that all the cells of the packet have been received and stored.

It can be seen that the technical solution designs an adaptive forwarding mode. In the forwarding mode, a packet is processed after a head cell of the packet is received, and the processing and a process of receiving the remaining cells of the packet are performed simultaneously and in parallel. Compared with a solution in the conventional store-forward mode in which a packet is processed only after all cells of the packet are received, the adaptive forwarding mode effectively reduces duration of stay of the packet in a storage and forwarding device, and lowers a delay, thereby providing a low-delay storing and forwarding technology. In addition, the method can specifically meet packet forwarding requirements of different services by allocating different forwarding modes for different types of packets. In addition, similar to the conventional store-forward, an adaptive forwarding module of the method still stores received cells of a packet and forwards the packet only after all the cells of the packet are received, stored and processed. Therefore, similar to the conventional storing and forwarding technology, the method can implement switching between ports with different rates. It can be seen that the method of this embodiment of the present invention retains the advantage of the conventional storing and forwarding technology and lowers a forwarding delay.

The following describes a specific process of packet storing and forwarding in embodiments of the present invention in detail with reference to the schematic structural diagram of the circuit shown in FIG. 2 (curves with arrows indicate a processing process of packet storing and forwarding) and the schematic flowchart of the method shown in FIG. 3.

First, the MAC receives a packet from a port, and sends the packet to the IPS by using an input channel.

Second, the IPS cuts the packet into one or more cells, and a port that gets a priority of dispatching sends the one or more cells to the PA.

The foregoing two steps are the same as step 1 and step 2 described above, and details are not described herein again.

S1: The PA receives a cell, obtains control information (CI) of the packet by parsing a head cell, and then sends the head cell, the corresponding CI, and data of remaining cells to the RD.

The PA may extract a feature field by parsing the head cell of the packet, and may query a classification table, such as a TCAM (ternary content addressable memory, ternary content addressable memory) table, according to the feature field to perform flow classification on the packet, extract a result of the flow classification, write the result in the control information (CI), and send the CI and data of the head cell to the RD.

The CI includes but not limited to a forwarding mode (FWD_Mode), an input channel (Input Channel) and a packet priority (Packet Priority). A forwarding policy may be configured in a storage and forwarding device in advance, and the PA may determine a forwarding mode of a packet according to the configured policy and a result of flow classification of the packet. In the present invention, the forwarding mode includes at least two types: one type is a store-forward mode, which is a conventional store-forward mode, indicating that a packet is processed and forwarded only after the complete packet is received; and the other type is adaptive forwarding, which is a new forwarding mode provided in the present invention, indicating that a packet may be processed after a head cell of the packet is received, and that the packet is forwarded after the processing is finished and the complete packet is received. The input channel refers to an input channel between the MAC and the IPS, and all cells of a packet are input from a same input channel. A priority of a packet may be determined by the PA according to a result of flow classification of the packet and a policy, or may be extracted from the packet, that is, a received packet may include a priority written by an upstream device.

There is a determined correspondence between CI of each packet and a head cell of the packet. For example, a sequence number of a packet or another identifier may be included in CI to indicate the packet to which the CI belongs, and the sequence number of the packet or the another identifier is also included in a head cell of the packet, thereby establishing a correspondence by using the sequence number or the another identifier.

S2: The RD receives the cells of the packet from the PA, obtains data of corresponding CI, and stores the cells of the packet, including the head cell and remaining cells except the head cell.

Optionally, the RD may include a reassembly and integrality checker (Reassembly and Integrality Checker, RIC) 101, configured to perform an integrality check on a packet before received cells of the packet are stored.

In actual implementation, the RD may reassemble a packet based on ports, and allocate buffers in the PB for received cells, and may store cells from a same port or a same input channel in a same buffer, and cells of a same packet are sequentially stored. The RD may include an ingress resources manager (Ingress Resources Manager, IRM) 102, configured to implement the foregoing operation of temporarily storing cells in the packet buffer (PB) of the storing and forwarding circuit. The PB may be configured to store the cells of the packet that have been received, including the head cell and the remaining cells.

In some embodiments, the IRM in the RD may link one or more cells of the packet that have been received to each other by using a linked list, and records an address of the head cell of the packet as an address of a link head. The IRM may further record or update, by using the address of the head cell of the packet as an index, receiving status (Status Table) information of the packet after writing data of the cells that have been received in the PB. The receiving status information includes at least an end of packet (End Of Packet, EOP) and a packet length (Packet Length, PLEN). The EOP indicates whether all the cells of the packet have been received (that is, the EOP indicates whether the packet has been integrally received), and the PLEN indicates a length of a received part of the packet. A Status Table may be stored in the PB in a form of a table.

In some embodiments, the RD may include: an input queue (Input Queue, IQ) unit 103, configured to provide at least one input queue (IQ). The RD may map an Input Channel and a Packet Priority of a packet to an IQ. The mapping operation may be finished, for example, by the RIC. The RIC may add, according to the input channel and the priority of the packet, the address of the head cell of the packet to an input queue corresponding to the input channel and the priority of the packet, so as to subsequently dispatch the packet in an order of the input queue. Each input queue IQ corresponds to one input channel, and packets from the input channel are all added to a corresponding IQ. In some embodiments, the IRM may further count, based on an IQ, cell resources and NP thread resources that are occupied.

S3: The foregoing operation of adding, according to the input channel and the priority of the packet, the packet to an input queue corresponding to the input channel and the priority of the packet may specifically include:
if the forwarding mode (FWD_Mode) indicates that a forwarding mode of the packet is adaptive forwarding, after receiving and storing the head cell of the packet, adding the address of the head cell of the packet (that is, a link head address) to the input queue (which may be briefly referred to as entering the IQ); or if the forwarding mode is store-forward, after receiving all the cells of the packet and obtaining and storing the complete packet, adding the address of the head cell of the packet to the input queue. The foregoing operations may be finished by the RIC in the RD.

S4: The packet that has entered an input queue is dispatched from the queue when there is a resource for processing the packet in the NP, and then data of the head cell of the packet is extracted according to the address of the head cell of the packet, and associated control information (Associated Control Information, ACI) and the data of the head cell are sent to the NP for processing. The operation may be finished by a pull controller (Pull Controller, PC) 104 in the RD.

It should be noted that, the RD may query a Status Table before sending the head cell to the NP for processing and obtain current receiving status information of the packet, including an EOP and a PLEN, and send the EOP and the PLEN as a part of the ACI to the NP. The RD may maintain the Status Table by using the head cell as an index, including: when a head cell is received, and the head cell is not a tail cell, the EOP is cleared (that is, written into 0); after a tail cell is received, the EOP is set (that is, rewritten into 1), and therefore, the EOP indicates whether all the cells of the packet have been received, that is, if the EOP is equal to 1, it indicates that the packet has been received integrally, or if the EOP is equal to 0, it indicates that the packet has not been received integrally; and after the head cell is received, the PLEN is recounted as a length of the head cell, and each time one cell is received, the PLEN is increased by a length of the cell, so that the PLEN indicates a length of a received part of the packet. Because a length of each cell is determined, a quantity of cells that have been received can be determined according to the PLEN.

S5: The NP obtains the receiving status information of the packet and the head cell, and processes the packet. When the NP processes the packet, whether the packet that currently needs to be processed has been received and stored in the PB can be learned according to the EOP and the PLEN.

If the EOP is equal to 1, that is, the EOP indicates that all the cells of the packet have been received, the NP performs processing according to the conventional solution for storing and forwarding, that is: the NP processes the packet according to the head cell of the packet, and after the processing is finished, the NP instructs the RD to read and forward all the cells of the packet that have been stored (forwarding the cells to a packet editor (PE) of the storage and forwarding device).

If the EOP is equal to 0, that is, the EOP indicates that some of the cells of the packet have not been received, the NP performs processing according to the adaptive forwarding mode, that is: the NP processes the packet according to the head cell of the packet, and after the processing is finished and the EOP is equal to 1, the NP instructs the RD to read and forward all the cells of the packet that have been stored (forwarding the cells to the PE); or, after the processing is finished, the NP instructs the RD to forward the cells, and the RD may read and forward all the cells of the packet that have been stored (forwarding the cells to the PE) after the EOP is equal to 1.

Optionally, the NP may include: an obtaining unit 203, a first processing unit 201, and a second processing unit 202. The obtaining unit 203 is configured to obtain the receiving status information and the head cell of the packet; the first processing unit 201 is configured to perform processing when the EOP is equal to 1; and the second processing unit 202 is configured to perform processing when the EOP is equal to 0.

Generally, the NP can finish processing the packet only according to the head cell. However, in some scenarios, the processing operation may need more cells, for example, the second cell of the packet. In this scenario, if the EOP is equal to 0, when the NP needs to use at least one cell sequentially after the head cell of the packet during processing, the NP may send a data reading command to the RD according to the need. The RD queries the Status Table, determines a quantity of cells that have been received according to the PLEN, and determines whether the at least one cell has been received. If the at least one cell has been received, the RD obtains and returns the at least one cell to the NP, and the NP obtains the at least one cell to continue to perform processing; or if the at least one cell has not been received, the RD does not return data, and the NP needs to continue to wait.

It should be note that, for general packet forwarding, the NP only needs to process forwarded information according to a head cell, and does not need to read data of more cells. If needed, the NP reads the second cell. However, in a microcode processing process, the second cell is generally received. If a service that needs to use a packet length is involved, processing is performed at the end of a whole service processing process as much as possible, so that it is of higher probability that a packet has been received when the NP obtains the packet length, which may reduce a wait time.

S6: Forward the packet.

After the NP finishes processing the packet, if the EOP is equal to 1, it may be determined that all the cells of the packet have been received and the packet has been integrally obtained, and then the NP may directly send a dispatch (Dispatch) command to the RD, to instruct the RD to read and forward data of all the cells of the packet that have been stored, that is, to send the packet to the PE; and
after the NP finishes processing the packet, if the EOP is equal to 0, it may be determined that some of the cells of the packet have not been received. Then, in one manner, the NP may send a query command to the RD, the RD queries the Status Table, and returns a result of the query to the NP after learning that the EOP is equal to 1, and then the NP sends a Dispatch command to the RD, to instruct the RD to read the packet and forward the packet to the PE; and in another manner, the NP may also directly send a Dispatch command to the RD, and the RD queries the Status Table, and reads data of all the cells of the packet and forwards the data to the PE after determining that the EOP is equal to 1.

The RD may further include a packet dispatch unit (Packet Dispatch, PD) 106. In the foregoing packet forwarding operation, the NP may specifically send a Dispatch command to the PD in the RD, and the PD performs the operation of reading and forwarding data of all the cells of the packet that have been stored to the PE.

After receiving the packet sent by the RD, the PE continues to forward the packet to back-end modules until the packet reaches a designated port, and then releases cell resources and NP thread resources to the IRM.

It should be noted that, in some embodiments, the NP may directly send a Dispatch command to the PE after finishing processing the packet, or after it is determined that all the cells of the packet have been received and the packet is integrally obtained, and the PE actively reads the packet from the PB and continues to forward the packet.

In the foregoing, the low-delay storing and forwarding technology of this embodiment of the present invention supports the IQ and dispatch, and adaptive switching to an equivalent forwarding mode can be implemented by using a congestion processing mechanism of the IQ. The IQ is obtained by means of a table query and mapping based on an input Input Channel and a Packet Priority, and therefore, the IQ embodies priority information. When the NP performs IQ dispatch, a priority participates in the dispatch as one of weights. All packets that enter IQs get a chance of being processed, but a packet in an input queue with a higher priority may have a higher chance of being processed in priority.

In addition, the IRM may count a situation of current resource occupation an IQ based on the IQ, that is, counting resources occupied by each input queue. The occupied resources include occupied cell buffer resources and occupied NP thread resources. The occupied cell buffer resources refer to resources that temporarily store cells in the PB, and the occupied NP thread resources may be statistics of occupied NP processing threads.

The IRM may perform congestion processing on a target input queue according to a policy, and implement a congestion processing mechanism of an IQ granularity. The congestion processing may include: performing backpressure (Backpressure) on the target input queue or discarding a packet of the target input queue. The backpressure refers to blocking an input of a target input queue. Optionally, an IQ provides SP+WRR dispatch, that is, WRR (Weighted Round Robin, weighted round robin) dispatch is performed on input queues with a same priority, and SP (Strict Priority, strict priority) dispatch is performed on input queues with different priorities, so as to further provide services with lower delays for packets with high priorities during congestion. It can be seen that the IQ mechanism can ensure that packets with high priorities are processed in priority, so as to provide forwarding services with lower delays. The congestion processing mechanism can prevent some input queues from occupying resources for a long time, so as to ensure that some other input queues can also get a chance of being processed.

When an ingress bandwidth is relatively small or a long grant bursts, NP processing is not a performance bottleneck, a system is not congested, an IQ is not pressed back, and a packet in the IQ is rapidly forwarded to the NP for processing. In this case, the system is approximately equivalent to CT forwarding, and the packet may be submitted to the NP for forwarding processing after a head cell is received, so that a forwarding delay is relatively low. On the contrary, when an ingress bandwidth is relatively large or a short grant bursts, NP processing is a performance bottleneck, a system is congested, an IQ is pressed back, and a packet queues in the IQ queue and waits to be forwarded to the NP for processing. In this case, the system is approximately equivalent to SF forwarding, and the packet is submitted to the NP for processing after being integrally received or being almost integrally received, resulting in a relatively large forwarding delay.

It can be seen from the above that, in some feasible implementation manners of the present invention, a new low-delay storing and forwarding technology is provided by combining the conventional storing and forwarding technology with a queue technology. For a packet with an adaptive forwarding mode, the packet is processed after a head cell of the packet is received, and the processing process and a process of receiving remaining cells of the packet are performed simultaneously, thereby effectively reducing duration of stay of the packet in a storage and forwarding device, and lowering a delay. For the conventional store-forward mode, processing is performed in conventional manners.

It can be seen that the solution implements that new low-delay services are provided for services having delay requirements strategically according to service flows, and that conventional services for storing and forwarding are provided for services having no delay requirements strategically according to service flows. In addition, the solution can dynamically and adaptively adjust a forwarding delay according to a system congestion status. When a system is congested, the delay is increased; and when the system is not congested, the delay is reduced, thereby effectively lowering an average delay of the system.

It can be seen that the technical solution of the present invention has both the advantage of the strong anti-burst capability of the conventional store-forward and the advantage of the low delay of the direct forwarding. A low-cost and low-delay forwarding solution may be provided for a system with a relatively large jitter but a small average flow by adaptive and dynamic switching between an approximately conventional store-forward mode and an approximately conventional direct forwarding mode.

It should be noted that each function module included in the foregoing packet storing and forwarding circuit provided in the foregoing embodiment of the present invention may be implemented by using one integrated circuit chip. The function modules may be connected to each other by using a bus, and may communicate with each other by using the bus.

The bus may be an industry standard architecture (ISA for short) bus, a peripheral component interconnect (PCI for short) bus, an extended industry standard architecture (EISA for short) bus, or the like. The bus may be classified as one or more of an address bus, a data bus, or a control bus.

The packet buffer 40 may include a high-speed RAM (Random Access Memory) memory. Optionally, the packet buffer 40 may further include a non-volatile memory (non-volatile memory). For example, the packet buffer 40 may include a magnetic disk memory.

The network processor 20 may be, for example, a dedicated central processing unit (Central Processing Unit, CPU for short), or may be an application specific integrated circuit (Application Specific Integrated Circuit, ASIC for short).

The reassembly and dispatch module 10 may be, for example, a dedicated CPU, or may be an ASIC.

The packet analyzer 30 may be, for example, a dedicated CPU, or may be an ASIC.

The packet editor 50 may be, for example, a dedicated CPU, or may be an ASIC.

It should be noted that, an embodiment of the present invention further provides, on the basis of the foregoing packet storing and forwarding circuit, a storage and forwarding device that includes the foregoing packet storing and forwarding circuit. The storage and forwarding device includes the foregoing modules shown in FIG. 2, and may further include a media access controller (MAC), an input packet scheduler (IPS), a packet analyzer (English: Packet Analyzer, PA for short), and an output packet scheduler (OPS) shown in FIG. 1.

In the foregoing embodiments, the description of each embodiment has respective focuses. For a part that is not described in detail in an embodiment, reference may be made to related descriptions in other embodiments.

The packet storing and forwarding method and circuit, and the device provided in the embodiments of the present invention are described in detail above. The principle and implementation of the present invention are described herein by using specific examples. The description about the embodiments of the present invention is merely provided to help understand the method and core ideas of the present invention. In addition, persons of ordinary skill in the art can make variations and modifications to the present invention in terms of the specific implementations and application scopes according to the ideas of the present invention. Therefore, the content of specification shall not be construed as a limit to the present invention.

## Claims

1. A packet storing and forwarding method, wherein the method comprises:
receiving and storing (310) cells of a packet, wherein the cells of the packet comprise a head cell; whereby the method further comprises:
obtaining control information according to the head cell, wherein the control information comprises a forwarding mode of the packet;
processing (320) the packet according to the forwarding mode of the packet, and if the forwarding mode of the packet is store-forward, processing the packet after receiving and storing all the cells of the packet; or if the forwarding mode of the packet is adaptive forwarding, processing the packet at the same time when receiving and storing remaining cells of the packet; and
forwarding (330), after the processing is finished, the packet after determining that all the cells of the packet have been received and stored.

2. The method according to claim 1, wherein the control information further comprises an input channel and a priority of the packet, and before the processing the packet according to the forwarding mode of the packet, the method further comprises:
adding, according to the input channel and the priority of the packet, an address of the head cell of the packet to an input queue corresponding to the input channel and the priority of the packet, so as to subsequently dispatch the packet in an order of the input queue.

3. The method according to claim 2, wherein the adding, according to the input channel and the priority of the packet, an address of the head cell of the packet to an input queue corresponding to the input channel and the priority of the packet comprises:
if the forwarding mode is adaptive forwarding, after receiving and storing the head cell of the packet, adding the address of the head cell of the packet to the input queue; or
if the forwarding mode is store-forward, after receiving and storing all the cells of the packet, adding the address of the head cell of the packet to the input queue.

4. The method according to claim 3, before the forwarding the packet, further comprising:
recording receiving status information of the packet by using the address of the head cell of the packet as an index, wherein the receiving status information comprises an end of packet, EOP, and a packet length, PLEN, the EOP indicates whether all the cells of the packet have been received, and the PLEN indicates a length of a received part of the packet.

5. The method according to claim 4, wherein the processing the packet according to the forwarding mode of the packet and forwarding the packet comprises:
obtaining the receiving status information of the packet; and
if the EOP indicates that all the cells of the packet have been received, forwarding the packet according to the head cell of the packet, and after the forwarding is finished, reading and forwarding all the cells of the packet that have been stored; or
if the EOP indicates that some of the cells of the packet are not received, forwarding the packet according to the head cell of the packet, and after the forwarding is finished and the EOP is equal to 1, reading and forwarding all the cells of the packet that have been stored.

6. The method according to claim 5, after the if the EOP indicates that some of the cells of the packet are not received, further comprising:
when at least one cell sequentially after the head cell of the packet needs to be used during processing, determining a quantity of cells that have been received according to the PLEN, and determining whether the at least one cell has been received, and if the at least one cell has been received, obtaining the at least one cell.

7. A packet storing and forwarding circuit, comprising:
a reassembly and dispatch module (10), and a packet buffer (40) and a network processor (20) that are separately connected to the reassembly and dispatch module, wherein
the reassembly and dispatch module is configured to: receive cells of a packet; reassemble the received cells; store the reassembled cells in the packet buffer, wherein the cells of the packet comprise a head cell; whereby the reassembly and dispatch module is further configured to obtain control information according to the head cell, wherein the control information comprises a forwarding mode of the packet;
the reassembly and dispatch module is further configured to dispatch the received packet to the network processor for processing;
the network processor is configured to process the packet according to the forwarding mode of the packet, and if the forwarding mode of the packet is store-forward, process the packet after the reassembly and dispatch module receives and stores all the cells of the packet; or if the forwarding mode of the packet is adaptive forwarding, process the packet at the same time when the reassembly and dispatch module receives and stores remaining cells of the packet; and
the reassembly and dispatch module is further configured to forward, after the network processor finishes processing, the packet after determining that all the cells of the packet have been received and stored.

8. The packet storing and forwarding circuit according to claim 7, wherein the control information further comprises an input channel and a priority of the packet, and the reassembly and dispatch module comprises a reassembly and integrality checker and an input queue unit, wherein
the input queue unit is configured to provide at least one input queue, so that the packet is dispatched to the network processor for processing in an order of the input queue,; and
the reassembly and integrality checker is configured to add, according to the input channel and the priority of the packet, the packet to an input queue corresponding to the input channel and the priority of the packet.

9. The packet storing and forwarding circuit according to claim 8, wherein
the reassembly and integrality checker is specifically configured to: if the forwarding mode is adaptive forwarding, after receiving and storing the head cell of the packet, add an address of the head cell of the packet to the input queue; or if the forwarding mode is store-forward, after receiving all the cells of the packet, add an address of the head cell of the packet to the input queue.

10. The packet storing and forwarding circuit according to claim 9, wherein
the reassembly and dispatch module further comprises an ingress resources manager, configured to record receiving status information of the packet by using the address of the head cell of the packet as an index, wherein the receiving status information comprises an end of packet, EOP, and a packet length, PLEN, the EOP indicates whether all the cells of the packet have been received, and the PLEN indicates a length of a received part of the packet.

11. The packet storing and forwarding circuit according to claim 10, wherein the network processor comprises:
an obtaining unit, configured to obtain the receiving status information and the head cell of the packet;
a first processing unit, configured to: if the EOP indicates that all the cells of the packet have been received, forward the packet according to the head cell of the packet; and after the forwarding is finished, instruct the reassembly and dispatch module to read and forward all the cells of the packet that have been stored; and
a second processing unit, configured to: if the EOP indicates that some of the cells of the packet are not received, process the packet according to the head cell of the packet, and after the processing is finished and the EOP is equal to 1, instruct the reassembly and dispatch module to read and forward all the cells of the packet that have been stored; or, after the processing is finished, instruct the reassembly and dispatch module to read and forward all the cells of the packet that have been stored; and
the reassembly and dispatch module is configured to read and forward all the cells of the packet that have been stored.

12. The packet storing and forwarding circuit according to claim 11, wherein
the second processing unit is further configured to: when at least one cell sequentially after the head cell of the packet needs to be used during processing, determine a quantity of cells that have been received according to the PLEN, and determine whether the at least one cell has been received, and if the at least one cell has been received, obtain the at least one cell.

## Patentansprüche

1. Packetspeicherungs- und Weiterleitungsverfahren, wobei das Verfahren aufweist:
Empfangen und Speichern (310) von Zellen eines Pakets, wobei die Zellen des Pakets eine Kopfzelle aufweisen;
wobei das Verfahren ferner aufweist:
Erhalten von Steuerinformationen gemäß der Kopfzelle, wobei die Steuerinformationen einen Weiterleitungsmodus des Pakets aufweisen;
Verarbeiten (320) des Pakets gemäß dem Weiterleitungsmodus des Pakets, und falls der Weiterleitungsmodus des Pakets eine Speicherungs-Weiterleitung ("store-forward") ist, Verarbeiten des Pakets nach dem Empfangen und Speichern aller Zellen des Pakets; oder falls der Weiterleitungsmodus des Pakets eine adaptive Weiterleitung ist, Verarbeiten des Pakets gleichzeitig zu dem Empfangen und Speichern verbleibender Zellen des Pakets; und
Weiterleiten (330), nachdem die Verarbeitung beendet ist, des Pakets nach einem Bestimmen, dass alle Zellen des Pakets empfangen und gespeichert worden sind.

2. Verfahren nach Anspruch 1, wobei die Steuerinformationen ferner einen Eingangskanal und eine Priorität des Pakets aufweisen, und vor dem Verarbeiten des Pakets gemäß dem Weiterleitungsmodus des Pakets das Verfahren ferner aufweist:
Hinzufügen, gemäß dem Eingangskanal und der Priorität des Pakets, einer Adresse der Kopfzelle des Pakets zu einer Eingangswarteschlange, die dem Eingangskanal und der Priorität des Pakets entspricht, um anschließend das Paket in einer Reihenfolge der Eingangswarteschlange zu versenden.

3. Verfahren nach Anspruch 2, wobei das Hinzufügen, gemäß dem Eingangskanal und der Priorität des Pakets, einer Adresse der Kopfzelle des Pakets zu einer Eingangswarteschlange, die dem Eingangskanal und der Priorität des Pakets entspricht, aufweist:
falls der Weiterleitungsmodus eine adaptive Weiterleitung ist, nach dem Empfangen und Speichern der Kopfzelle des Pakets, Hinzufügen der Adresse der Kopfzelle des Pakets zu der Eingangswarteschlange; oder
falls der Weiterleitungsmodus eine Speicherungs-Weiterleitung ist, nach dem Empfangen und Speichern aller Zellen des Pakets, Hinzufügen der Adresse der Kopfzelle des Pakets zu der Eingangswarteschlange.

4. Verfahren nach Anspruch 3, vor dem Weiterleiten des Pakets, ferner aufweisend:
Aufzeichnen von Empfangsstatusinformationen des Pakets unter Verwendung der Adresse der Kopfzelle des Pakets als ein Index, wobei die Empfangsstatusinformationen ein Ende des Pakets, EOP, und eine Paketlänge, PLEN, aufweisen, wobei das EOP anzeigt, ob alle Zellen des Paket empfangen worden sind, und die PLEN eine Länge eines empfangenen Teils des Pakets anzeigt.

5. Verfahren nach Anspruch 4, wobei das Verarbeiten des Pakets gemäß dem Weiterleitungsmodus des Pakets und das Weiterleiten des Pakets aufweisen:
Erhalten der Empfangsstatusinformationen des Pakets; und
falls das EOP anzeigt, dass alle Zellen des Pakets empfangen worden sind, Weiterleiten des Pakets gemäß der Kopfzelle des Pakets, und nachdem die Weiterleitung beendet ist, Lesen und Weiterleiten aller Zellen des Pakets, die gespeichert worden sind; oder
falls das EOP anzeigt, dass einige der Zellen des Pakets nicht empfangen worden sind, Weiterleiten des Pakets gemäß der Kopfzelle des Pakets, und nachdem die Weiterleitung beendet ist und das EOP gleich 1 ist, Lesen und Weiterleiten aller Zellen des Pakets, die gespeichert worden sind.

6. Verfahren nach Anspruch 5, nachdem das EOP anzeigt, dass einige der Zellen des Pakets nicht empfangen werden, ferner aufweisend:
falls mindestens eine Zelle sequentiell nach der Kopfzelle des Pakets während der Verarbeitung verwendet werden muss, Bestimmen einer Menge von Zellen, die gemäß der PLEN empfangen worden sind, und Bestimmen, ob die mindestens eine Zelle empfangen worden ist, und falls die mindestens eine Zelle empfangen worden ist, erhalten der mindestens einen Zelle.

7. Packetspeicherungs- und Weiterleitungsschaltung, aufweisend:
ein Neuzusammensetzungs- und Versandmodul (10), und einen Paketpuffer (40) und einen Netzwerkprozessor (20), die separat mit dem Neuzusammensetzungs- und Versandmodul verbunden sind, wobei
das Neuzusammensetzungs- und Versandmodul konfiguriert ist zum: Empfangen von Zellen eines Pakets; Neuzusammensetzen der empfangenen Zellen; Speichern der neuzusammengesetzten Zellen in dem Paketpuffer, wobei die Zellen des Pakets eine Kopfzelle aufweisen;
wobei das Neuzusammensetzungs- und Versandmodul ferner konfiguriert ist, Steuerinformationen gemäß der Kopfzelle zu erhalten, wobei die Steuerinformationen einen Weiterleitungsmodus des Pakets aufweisen;
das Neuzusammensetzungs- und Versandmodul ferner konfiguriert ist, das empfangene Paket zur Verarbeitung an den Netzwerkprozessor zu senden;
der Netzwerkprozessor konfiguriert ist, das Paket gemäß dem Weiterleitungsmodus des Pakets zu verarbeiten, und falls der Weiterleitungsmodus des Pakets eine Speicherungs-Weiterleitung ist, das Paket zu verarbeiten, nachdem das Neuzusammensetzungs- und Versandmodul alle Zellen des Pakets empfängt und speichert; oder falls der Weiterleitungsmodus des Pakets eine adaptive Weiterleitung ist, das Paket gleichzeitig dazu, dass das Neuzusammensetzungs- und Versandmodul verbleibende Zellen des Pakets empfängt und speichert, zu verarbeiten; und
das Neuzusammensetzungs- und Versandmodul ferner konfiguriert ist, nachdem der Netzwerkprozessor die Verarbeitung beendet hat, das Paket weiterzuleiten, nach einem Bestimmen, dass alle Zellen des Pakets empfangen und gespeichert worden sind.

8. Packetspeicherungs- und Weiterleitungsschaltung nach Anspruch 7, wobei die Steuerinformationen ferner einen Eingangskanal und eine Priorität des Pakets aufweisen, und das Neuzusammensetzungs- und Versandmodul einen Neuzusammensetzungs- und Vollständigkeitsprüfer und eine Eingangswarteschlangeneinheit aufweist, wobei
die Eingangswarteschlangeneinheit konfiguriert ist, mindestens eine Eingangswarteschlange bereitzustellen, so dass das Paket zur Verarbeitung in einer Reihenfolge der Eingangswarteschlange an den Netzwerkprozessor gesendet wird; und
der Neuzusammensetzungs- und Vollständigkeitsprüfer konfiguriert ist, das Paket gemäß dem Eingangskanal und der Priorität des Pakets zu einer Eingangswarteschlange hinzuzufügen, die dem Eingangskanal und der Priorität des Pakets entspricht.

9. Packetspeicherungs- und Weiterleitungsschaltung nach Anspruch 8, wobei der Neuzusammensetzungs- und Vollständigkeitsprüfer speziell konfiguriert ist zum: falls der Weiterleitungsmodus eine adaptive Weiterleitung ist, nach dem Empfang und Speichern der Kopfzelle des Pakets eine Adresse der Kopfzelle des Pakets zu der Eingangswarteschlange hinzuzufügen; oder falls der Weiterleitungsmodus eine Speicherungs-Weiterleitung ist, nach dem Empfang aller Zellen des Pakets eine Adresse der Kopfzelle des Pakets zu der Eingangswarteschlange hinzufügen.

10. Packetspeicherungs- und Weiterleitungsschaltung nach Anspruch 9, wobei das Neuzusammensetzungs- und Versandmodul ferner eine Eingangsressourcenverwaltung aufweist, die zum Aufzeichnen von Empfangsstatusinformationen des Pakets unter Verwendung der Adresse der Kopfzelle des Pakets als ein Index konfiguriert ist, wobei die Empfangsstatusinformationen ein Ende des Pakets, EOP, und eine Paketlänge, PLEN, aufweisen, wobei das EOP anzeigt, ob alle Zellen des Pakets empfangen worden sind, und die PLEN eine Länge eines empfangenen Teils des Pakets anzeigt.

11. Packetspeicherungs- und Weiterleitungsschaltung nach Anspruch 10, wobei der Netzwerkprozessor aufweist:
eine Erlangungseinheit, die konfiguriert ist, die Empfangsstatusinformationen und die Kopfzelle des Pakets zu erhalten;
eine erste Verarbeitungseinheit, die konfiguriert ist zum: falls das EOP anzeigt, dass alle Zellen des Pakets empfangen worden sind, das Paket gemäß der Kopfzelle des Pakets weiterzuleiten; und nachdem die Weiterleitung beendet ist, das Neuzusammensetzungs- und Versandmodul anweisen, alle Zellen des Pakets, die gespeichert worden sind, zu lesen und weiterzuleiten; und
eine zweite Verarbeitungseinheit, die konfiguriert ist zum: falls das EOP anzeigt, dass einige der Zellen des Pakets nicht empfangen werden, das Pakets gemäß der Kopfzelle des Pakets zu verarbeiten, und nachdem die Verarbeitung beendet ist und die EOP gleich 1 ist, das Neuzusammensetzungs- und Versandmodul anweisen, alle Zellen des Pakets, die gespeichert worden sind, zu lesen und weiterzuleiten; oder
nachdem die Verarbeitung beendet ist, das Neuzusammensetzungs- und Versandmodul anweisen, alle Zellen des Pakets, die gespeichert worden sind, zu lesen und weiterzuleiten; und
wobei das Neuzusammensetzungs- und Versandmodul konfiguriert ist, alle Zellen des Pakets, die gespeichert worden sind, zu lesen und weiterzuleiten.

12. Packetspeicherungs- und Weiterleitungsschaltung nach Anspruch 11, wobei die zweite Verarbeitungseinheit ferner konfiguriert ist zum: wenn mindestens eine Zelle sequentiell nach der Kopfzelle des Pakets während der Verarbeitung verwendet werden muss, eine Menge von Zellen zu bestimmen, die gemäß dem PLEN empfangen worden sind, und zu bestimmen, ob die mindestens eine Zelle empfangen worden ist, und falls die mindestens eine Zelle empfangen worden ist, die mindestens eine Zelle zu erhalten.

## Revendications

1. Procédé de stockage et de transmission de paquet, dans lequel le procédé consiste :
à recevoir et à stocker (310) des cellules d'un paquet, dans lequel les cellules du paquet comprennent une cellule de tête ;
grâce à quoi le procédé consiste en outre :
à obtenir des informations de commande en fonction de la cellule de tête, dans lequel les informations de commande comprennent un mode de transmission du paquet ;
à traiter (320) le paquet en fonction du mode de transmission du paquet et, si le mode de transmission du paquet est stocker-transmettre, à traiter le paquet après la réception et le stockage de toutes les cellules du paquet ; ou si le mode de transmission du paquet est une transmission adaptative, à traiter le paquet au même moment que la réception et le stockage de cellules restantes du paquet ; et
à transmettre (330), après que le traitement est fini, le paquet après la détermination que toutes les cellules du paquet ont été reçues et stockées.

2. Procédé selon la revendication 1, dans lequel les informations de commande comportent en outre un canal d'entrée et une priorité du paquet et, avant le traitement du paquet en fonction du mode de transmission du paquet, le procédé consiste en outre :
à ajouter, en fonction du canal d'entrée et de la priorité du paquet, une adresse de la cellule de tête du paquet à une file d'attente d'entrée correspondant au canal d'entrée et à la priorité du paquet de sorte à expédier, par la suite, le paquet selon un ordre de la file d'attente d'entrée.

3. Procédé selon la revendication 2, dans lequel l'ajout, en fonction du canal d'entrée et de la priorité du paquet, d'une adresse de la cellule de tête du paquet à une file d'attente d'entrée correspondant au canal d'entrée et à la priorité du paquet consiste :
si le mode de transmission est une transmission adaptative, après la réception et le stockage de la cellule de tête du paquet, à ajouter l'adresse de la cellule de tête du paquet à la file d'attente d'entrée ; ou
si le mode de transmission est stocker-transmettre, après la réception et le stockage de toutes les cellules du paquet, à ajouter l'adresse de la cellule de tête du paquet à la file d'attente d'entrée.

4. Procédé selon la revendication 3, avant la transmission du paquet, consistant en outre :
à enregistrer des informations d'état de réception du paquet en utilisant l'adresse de la cellule de tête du paquet comme indice, dans lequel les informations d'état de réception comportent une fin de paquet (EOP) et une longueur de paquet (PLEN), la fin de paquet indique si toutes les cellules du paquet ont été reçues et la longueur PLEN indique une longueur d'une partie reçue du paquet.

5. Procédé selon la revendication 4, dans lequel le traitement du paquet en fonction du mode de transmission du paquet et la transmission du paquet consistent :
à obtenir les informations d'état de réception du paquet ; et
si la fin du paquet indique que toutes les cellules du paquet ont été reçues, à transmettre le paquet en fonction de la cellule de tête du paquet et, après que la transmission est finie, à lire et à transmettre toutes les cellules du paquet qui ont été stockées ; ou
si la fin du paquet indique que quelques-unes des cellules du paquet ne sont pas reçues, à transmettre le paquet en fonction de la cellule de tête du paquet et, après que la transmission est finie et si la fin du paquet est égale à 1, à lire et à transmettre toutes les cellules du paquet qui ont été stockées.

6. Procédé selon la revendication 5, dans lequel, après le fait que si la fin du paquet indique que quelques-unes des cellules du paquet ne sont pas reçues, consistant en outre :
lorsqu'au moins une cellule de façon séquentielle après la cellule de tête du paquet doit être utilisée pendant un traitement, à déterminer une quantité de cellules qui ont été reçues en fonction de la longueur PLEN et à déterminer si la ou les cellules ont été reçues et, si la ou les cellules ont été reçues, à obtenir la ou les cellules.

7. Circuit de stockage et de transmission de paquet comprenant :
un module de rassemblement et d'expédition (10) et une mémoire tampon de paquet (40) et un processeur de réseau (20) qui sont reliés séparément au module de rassemblement et d'expédition, dans lequel
le module de rassemblement et d'expédition est configuré : pour recevoir des cellules d'un paquet ; pour rassembler les cellules reçues ; pour stocker les cellules rassemblées dans la mémoire tampon de paquet, dans lequel les cellules du paquet comprennent une cellule de tête ;
grâce à quoi le module de rassemblement et d'expédition est en outre configuré pour obtenir des informations de commande en fonction de la cellule de tête, dans lequel les informations de commande comprennent un mode de transmission du paquet ;
le module de rassemblement et d'expédition est en outre configuré pour expédier le paquet reçu au processeur de réseau pour traitement ;
le processeur de réseau est configuré pour traiter le paquet en fonction du mode de transmission du paquet et, si le mode de transmission du paquet est stocker-transmettre, pour traiter le paquet après que le module de rassemblement et d'expédition reçoit et stocke toutes les cellules du paquet ; ou si le mode de transmission du paquet est une transmission adaptative, pour traiter le paquet au même moment où le module de rassemblement et d'expédition reçoit et stocke des cellules restantes du paquet ; et
le module de rassemblement et d'expédition est en outre configuré pour transmettre, après que le processeur de réseau finit un traitement, le paquet après la détermination que toutes les cellules du paquet ont été reçues et stockées.

8. Circuit de stockage et de transmission de paquet selon la revendication 7, dans lequel les informations de commande comportent en outre un canal d'entrée et une priorité du paquet et le module d'expédition comprend un dispositif de vérification de rassemblement et d'intégralité et une unité de file d'attente d'entrée, dans lequel l'unité de file d'attente d'entrée est configurée pour fournir au moins une file d'attente d'entrée de telle sorte que le paquet soit expédié au possesseur de réseau pour un traitement selon un ordre de la file d'attente d'entrée ; et
le dispositif de vérification de rassemblement et d'intégralité est configuré pour ajouter, en fonction du canal d'entrée et de la priorité du paquet, le paquet à une file d'attente d'entrée correspondant au canal d'entrée et à la priorité du paquet.

9. Circuit de stockage et de transmission de paquet selon la revendication 8, dans lequel le dispositif de vérification de rassemblement et d'intégralité est spécialement configuré : si le mode de transmission est une transmission adaptative, après la réception et le stockage de la cellule de tête du paquet, pour ajouter une adresse de la cellule de tête du paquet à la file d'attente d'entrée ; ou si le mode de transmission est stocker-transmettre, après la réception de toutes les cellules du paquet, pour ajouter une adresse de la cellule de tête du paquet à la file d'attente d'entrée.

10. Circuit de stockage et de transmission de paquet selon la revendication 9, dans lequel le module de rassemblement et d'expédition comprend en outre un gestionnaire de ressources entrantes, configuré pour enregistrer des informations d'état de réception du paquet en utilisant l'adresse de la cellule de tête du paquet comme indice, dans lequel les informations d'état de réception comportent une fin de paquet (EOP) et une longueur de paquet (PLEN), la fin de paquet indique si toutes les cellules du paquet ont été reçues et la longueur PLEN indique une longueur d'une partie reçue du paquet.

11. Circuit de stockage et de transmission de paquet selon la revendication 10, dans lequel le processeur de réseau comprend :
une unité d'obtention, configurée pour obtenir les informations d'état de réception du paquet et la cellule de tête du paquet ;
une première unité de traitement, configurée : si la fin du paquet indique que toutes les cellules du paquet ont été reçues, pour transmettre le paquet en fonction de la cellule de tête du paquet ; et, après que la transmission est finie, pour donner comme instruction au module de rassemblement et d'expédition de lire et de transmettre toutes les cellules du paquet qui ont été stockées ; et
une seconde unité de traitement, configurée : si la fin du paquet indique que quelques-unes des cellules du paquet ne sont pas reçues, pour traiter le paquet en fonction de la cellule de tête du paquet et, après que le traitement est fini et si la fin du paquet est égale à 1, pour donner comme instruction au module de rassemblement et d'expédition de lire et de transmettre toutes les cellules du paquet qui ont été stockées ; ou après que le traitement est fini, pour donner comme instruction au module de rassemblement et d'expédition de lire et de transmettre toutes les cellules du paquet qui ont été stockées ; et
le module de rassemblement et d'expédition est configurée pour lire et pour transmettre toutes les cellules du paquet qui ont été stockées.

12. Circuit de stockage et de transmission de paquet selon la revendication 11, dans lequel
la seconde unité de traitement est en outre configurée : lorsqu'au moins une cellule de façon séquentielle après la cellule de tête du paquet doit être utilisée pendant un traitement, pour déterminer une quantité de cellules qui ont été reçues en fonction de la longueur PLEN et pour déterminer si la ou les cellules ont été reçues et, si la ou les cellules ont été reçues, pour obtenir la ou les cellules.
